# EUROPEAN PATENT SPECIFICATION

(11) **EP 1 348 537 B1**
(45) Date of publication and mention of the grant of the patent: **14.06.2006**
(21) Application number: 02380068.3
(22) Date of filing: 26.03.2002
(51) Int. Cl.: B32B 17/06, E04C 2/34, E04F 17/04, B29C 63/04

(54) **Process and equipment for encapsulating a fibrous material for insulation and encapsulated fibrous material for insulation**
Verfahren und Geräte zum Einkapseln von faserformigem Isoliermaterial und eingekapseltes faserformiges Isoliermaterial
Procédé et appareil pour encapsuler un matériel d'isolation et un matériel d'isolation encapsulé

(43) Date of publication of application: 01.10.2003
(73) Proprietor: URSA IBÉRICA AISLANTES, S.A., 08010 Barcelona (ES)
(72) Inventor: Giró Guasch, Enric, 43100 Vallmoll (Tarragona) (ES); Marles Fortuny, Jaume, 43320 Pratdip (Tarragona) (ES); Coll Francés, Carles, 43002 Tarragona (ES)
(74) Representative: Gislon, Gabriele

(56) References cited:
- WO-A-98/35109
- GB-A- 1 087 962
- GB-A- 2 264 261
- US-A- 2 913 104
- US-A- 5 240 527
- US-A- 5 246 516
- US-A- 5 685 938
- US-A- 5 848 509
- DATABASE WPI Section Ch, Week 198109 Derwent Publications Ltd., London, GB; Class L02, AN 1981-14533D XP002209761 & JP 55 164150 A (ASAHI FIBREGLASS CO), 20 December 1980 (1980-12-20)

## Description

### Technical field

This invention refers to a procedure for non-stop encapsulating a fibrous insulating material which comprises applying and adhering a coating sheet material on a top larger face of a mat of said insulating material, superimposing side stripes of said coating sheet material onto smaller side faces and onto areas next to the side edges of a lower larger face of said insulating material and thereafter applying and adhering a base sheet material onto said lower face and said stripes of the coating sheet material superimposed thereon while the coating sheet material is stretched. This invention also refers to a plant for carrying out said procedure and the encapsulated insulating material obtained thereof.

### Background of the invention

In building and other industries, it is usual to use mats of a fibrous insulating material, more specifically, wool or mineral fibre mats, either agglomerated or bond with resins. Said mats are continuously produced by means of special furnaces and when they exit therefrom they have a lengthwise flat configuration with top and lower larger faces substantially flat and opposite and two opposite smaller side faces. Thereafter, the mats are cut in separate portions having the required size thereby additional opposite front and back faces are formed.

It is known adhering on one of said mat larger faces a base sheet material, such as paper impregnated of a bituminous substance, which acts as a barrier against the humidity or steam. It is also known coating the other of the larger faces and the two side smaller faces with a sheet material such as an unwoven fabric, bond to the base sheet material in order to encapsulate the insulating material and thereby preventing the mineral fibres from a direct contact with the skin of the handling workers since it could result irritative, and also preventing loose fibres or dust from escaping from the mat to the work environment. This encapsulated insulating material is generally compressed after producing it in order to reduce its bulk during storage and carriage and when thereafter it is released from the packing it recovers its volume up to a rated amount specified by the manufacturer.

Patent US-A-2,913,104 discloses an encapsulated insulating material of the kind disclosed above in which the base and coating sheet materials are adhered to each other by respective side stripes which are laterally protruding at the level of the lower larger face of the mat and coplanar therewith. These stripes adhered to each other are thereafter folded and superimposed onto the respective smaller side faces and releasibly adhered thereto.

Patent WO 98/35109 discloses a segmented and encapsulated insulating material very similar to that of above patent but in which the fibre mat has cross partial cuts which are made to coincide with cross weakened lines of the coating and base sheet materials which are applied and adhered to each other after cuts have been made and a treatment against dust on the surfaces of the cuts has been applied. The mutually adhered portions of coating and base sheet materials form wings parallel to the larger faces of the mat at half the height of its side faces or at the level of the lower face.

Patent US-A-5,240,527 discloses a method for producing mats of encapsulated fibrous insulating material with an air-permeable sheet on one of its larger faces and a non-porous film spread over the other larger face and the two side smaller faces. The method comprises adhering the permeable sheet on the lower larger face of the mat of fibrous material; continuously transferring the mat through the station of application of sheet material; continuously applying said non-porous film on the top face of the mat, the non porous width of said film being wider than the width of the mat of insulating material in such an amount that the film is spread downward over the side faces of the mat and beyond the lower face; and continuously folding the portions of the film which are extending beyond the lower face until contacting the permeable sheet, overlapping it next to the side edges of the lower face and adhering the overlapped portions of the non-porous film to the permeable sheet. Said protruding portions of the film are folded by stationary deflectors and are adhered to the sheet by heat sealing. However, the fact of folding the protruding portions of the film on the lower face of the mat does not produce a stretching effect on the film before it is adhered to the permeable sheet, therefore the assembly produced tends to remain loose.

Patent WO 97/08401 discloses an assembly of insulating material of encapsulated mineral fibre comprising a core and a cover. The core is a portion of mat of said insulating material which has two opposite larger surfaces, two opposite smaller side surfaces and two opposite end surfaces. The cover is composed of a sheet of an unwoven material which is spread on a first of the larger surfaces, the two side surfaces and parts next to the side edges of the second larger surface and a sheet of rag paper impregnated of a bituminous material which is spread on the second larger surface and on or under said portions of the sheet of unwoven material which is spread thereon. The unwoven material is adhered at least to the first larger surface and at least to one of its side surfaces,

This same patent discloses a procedure for non-stop producing the encapsulated assembly, which comprises first spreading the sheet of unwoven material on the top face of a mat of fibrous displacing material. Thereafter, passing the assembly by a folding station in which an excess of width of the unwoven material is folded on the side faces and on the lower face by means of a device including deflectors and a vacuum sucking box. Finally, applying the sheet impregnated of bituminous material which is adhered to the lower face of the mat and to the portions of the unwoven material superimposed against it. However, the above disclosed vacuum device of the folding station assists to superimpose the end side portions of the unwoven material onto said parts next to the side edges of the second larger surface, but however, said parts are not dragged toward the centre of the second larger face and therefore, no stretching effect of the unwoven material occurs on the mat of fibrous material before it is set in position by adhering said lower impregnated sheet, therefore the assembly produced tends to remain loose. In addition, this folding station results relatively complex and its operation is relatively high power-consuming.

It is an object of this invention to overcome previous drawbacks by providing a procedure for non-stop encapsulating a fibrous insulating material which has a simple design and a cheap operation, and comprising means for spreading and superimposing end side stripes of a coating sheet material, which has been initially spread on a top face of a continuous mat of fibrous insulating material, onto areas adjacent to side edges of a lower face of the mat, said means being capable in addition to stretch said stripes towards the centre of the lower face just before applying on said lower face a base sheet material provided with an adhesive substance impregnating its contacting face.

It is another object of this invention to provide a plant adapted for implementing the previous procedure.

It is a further object of this invention to provide an encapsulated fibrous insulating material in which said coating sheet material is kept stretched against the mat of insulating material by said base sheet material adhered to said lower face and to said end stripes of coating material, said encapsulated fibrous insulating material being susceptible to be obtained by means of the procedure and/or the plant of this invention.

### Description of the invention

Above objects are achieved, according with this invention by providing a procedure for non-stop encapsulating a fibrous insulating material, said insulating material having a lengthwise configuration and comprising opposite substantially flat top and lower larger faces and two opposite side smaller faces. The procedure comprises first moving forwards a continuous mat of said insulating material in its longitudinal direction and with its lower face on a supporting surface Thereafter, it is proceeded to apply an adhesive at least on said top face of the insulating material by means of an applicator, for example spraying it. Thereafter it is proceeded to spread with a first laminating roller provided with a back roller the continuous coating sheet material on said top face in which said adhesive has been applied. The pressure exerted between said laminating roller and the related back roller assures the adhesion of said coating sheet material to the top face of the mat. This coating sheet material has a larger width that the sum of the top face and the two side faces of the mat, therefore first side stripes of the coating sheet material protrude beyond the side edges of the larger face said stripes being initially in a coplanar position with the top face. Thereafter it is proceeded to move said first stripes to spread them on the two side faces and thereafter to wrinkle, spread and superimpose second stripes of coating sheet material, which are end portions of the first stripes, on areas adjacent to side edges of the lower face of the mat, stretching them toward the centre of the lower face, by means of at least a pair of rotary inclined rollers. Immediately after, it is proceeded to apply, by means of a second laminating roller provided with a related back roller, a base sheet material, supplied from a second feeder of continuous sheet material and provided with an adhesive substance impregnating its contacting face on the lower face of the mat and the second stripes spread and stretched thereon. With the pressure exerted between said second laminating roller and its back roller, it is secured that said base sheet material results adhered by said adhesive substance to the lower face of the mat and to the second end stripes of the coating sheet material superimposed thereon while they are stretched.

Optionally, and namely when the mat of insulating material has a significant thickness, the procedure comprises, after the step of spreading the coating sheet material, folding said first stripes for partly superimposing them onto the two side faces by means of at least a pair of deflectors located one on each sides of the supporting surface, downstream said laminating roller and before said pair of rotary inclined rollers, thereby said second stripes are formed in a substantially coplanar arrangement with the lower face of the mat while they are wrinkled and moved.

The procedure comprise to regulate the slope of said rotary inclined rollers at least in a plane parallel to the lower face, and optionally also in a plane transversal thereto, the slope of each roller been chosen in combination with its rotation direction for wrinkling and moving the related second stripe toward the centre of the lower face stretching the coating sheet material on the insulating material mat. Preferably, to secure that the second stripes of coating sheet material are dragged, the procedure comprises to interpose stationary bearing plates between the lower face of the insulating material mat and the second stripes while the rotary inclined rollers are in contact with them.

Optionally, if it is considered necessary because of the thickness of the mat of fibre, the procedure comprises pressing the first stripes of coating sheet material against the two side faces of the mat by means of a side pressing device after the step of folding and superimposing said first stripes onto the two side faces.

For impregnating said adhesive substance onto the contact face of the base sheet material, its is passed through an applicator of adhesive substance before the step of applying the base sheet material onto the lower face of the mat.

Last, the procedure comprises to cut, by means of a cutting device, the mat of insulating material encapsulated by the coating sheet material and by the base sheet material in portions of separate encapsulated insulating material. With this, the encapsulated insulating material of this invention is achieved, which comprises a core of a fibrous insulating material, which has a lengthwise configuration and has opposite substantially flat top and lower larger faces, two smaller opposite side faces and opposite front and back faces; a coating sheet material spread on said top face and provided with first side stripes spread on said side faces and second stripes which are end portions of said first stripes, spread on areas adjacent to side edges of said lower face, said coating sheet material being adhered at least to said top face; and a base sheet material adhered to said lower face and to said second stripes, wherein said coating sheet material is kept stretched against the mat of insulating material by said base sheet material adhered to said lower face and to said second stripes.

### Brief explanation of the drawings

A preferred exemplary embodiment of the plant and a preferred exemplary embodiment of the product of this invention will be described now in detail with reference to the accompanying drawings, in which:
Fig. 1 is a diagrammatic side elevation view of the plant of this invention;
Fig. 2 is a diagrammatic top plan view of the plant of Fig. 1;
Figs. 3 to 7 are cross sectional views taken respectively along the lines III to VII of Fig. 1 and 2, in the direction of the arrows;
Fig. 8 is a front elevation view of the mounting of the pair of rotary inclined rollers of Figs. 1, 2 and 6 according to a variation of embodiment allowing to regulate the slope on a plane parallel to the mat of insulating material.
Fig. 9 is a front elevation view of the mounting of the pair of rotary inclined rollers of Figs. 1, 2 and 6 according to another variation of embodiment allowing to regulate the slope as well in a plane parallel as in a plane transversal to the mat of insulating material; and
Fig. 10 is a partial perspective view showing the encapsulated fibrous insulating material of this invention.

### Detailed description of the preferred examples of embodiment

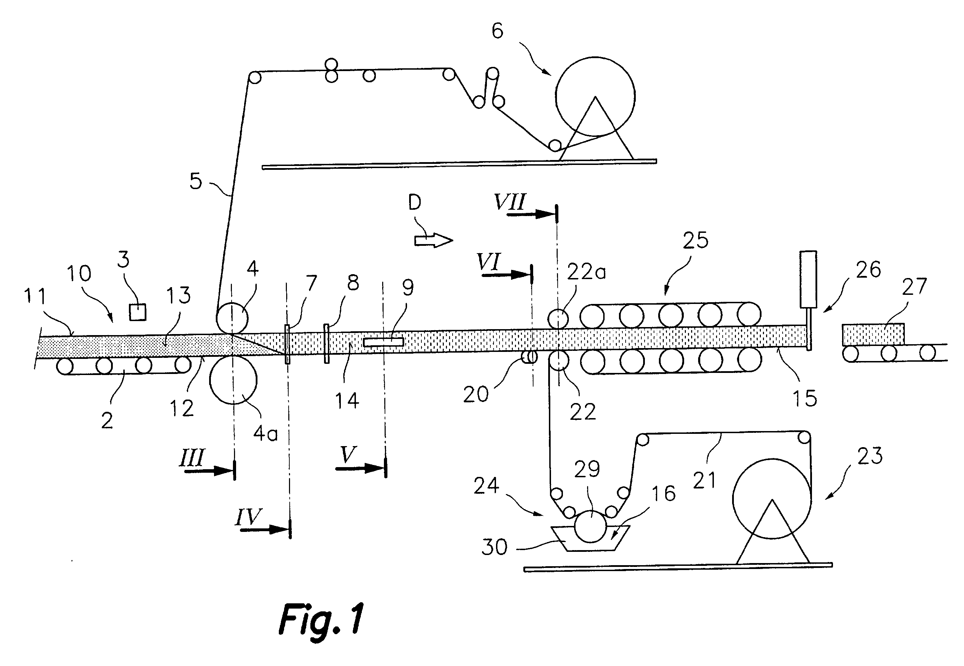

Referring first to Figs. 1 to 7, the plant for non-stop encapsulating a fibrous insulating material of this invention is described, the same description also serving to explain the procedure of the invention.

Fig. 1 shows a supporting surface 2 on which conveying means move forward a continuous mat of said insulating material 10, having a longitudinal configuration which comprises opposite substantially flat top and lower larger faces 11, 12 and two opposite side smaller faces 13. The mat of insulating material is moving lengthwise, as designated by arrow D and with its lower face 12 on said supporting surface 2. Said mat 10 is usually continuously produced from mineral wool, for example glass wool mixed with an agglutinating polymer, which is heated and shaped in a special furnace and the plant of this invention can be arranged after the outlet of the furnace for receiving the mat as it exits from said furnace. Said conveying means which drags the mat 10 on the supporting surface 2 can be dragging means (not shown) of the furnace itself which pull the mat from the exit thereof. However, the plant of this invention can operate independently from the furnace and use a mat of insulating material 10 coming from any other supplying source, continuously or in relatively long lengths. Anyway, dragging means 25 can drag the mat from an end area of the plant. The supporting surface 2 can be any flat surface preferably provided with freely rotating rollers or endless bands and although in Fig. 1 only an initial length of the supporting surface 2 is shown, it covers substantially the whole of the plant length with logical interruptions at the places where other devices are installed.

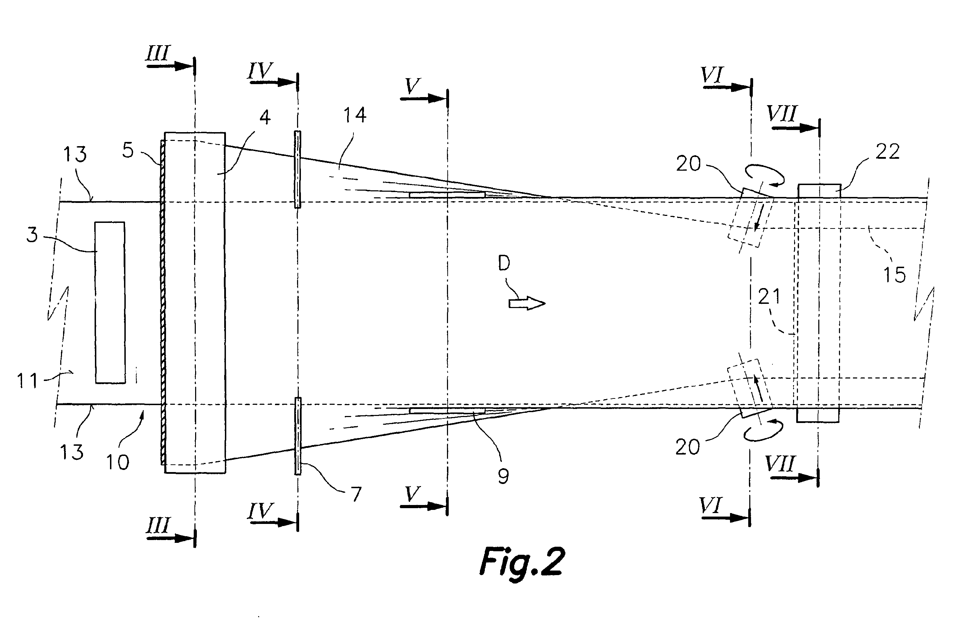

At the beginning of the plant, the mat 10 passes under an applicator 3 (see also Fig. 2) which is capable of applying an adhesive at least on said top face 11 of the insulating material 10 while it is moved by the conveying means. This applicator 3 is, for example, a sprayer of liquid adhesive and can cover the whole of the surface of the top face 11 or only lengthwise or transversal stripes or any other pattern of application which is thought suitable. Downstream said applicator 3 a first supplier of continuous sheet material 6 is mounted which co-operates with a first laminating roller 4, provided with related back roller 4a for spreading a coating sheet material 5 on said top face 11 in which said adhesive is applied. The pressure of both rollers 4, 4a secures the adherence of said coating sheet material 5 to the top face 11.

The coating sheet material 5 is wider than the sum of the top face 11 and the two side faces 13, so that first strips 14 of the coating sheet material 5 protrudes beyond the side edges of the larger face 11, as can be best seen from Fig, 3.

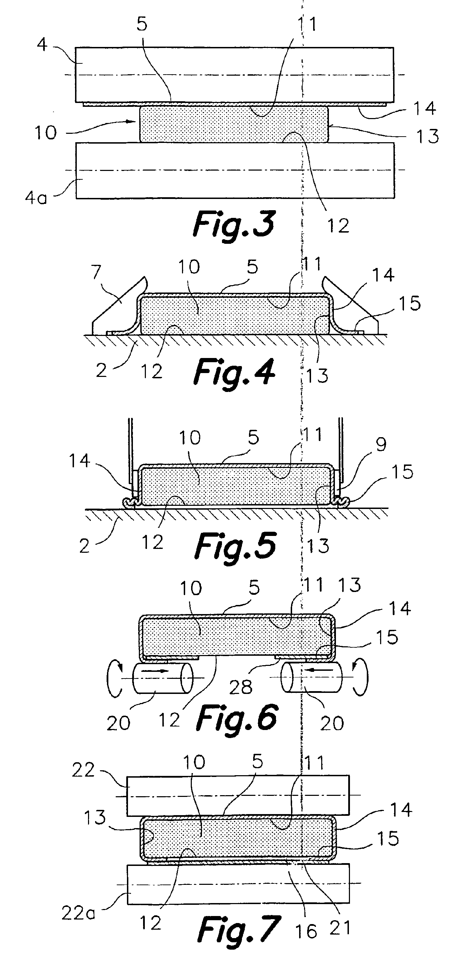

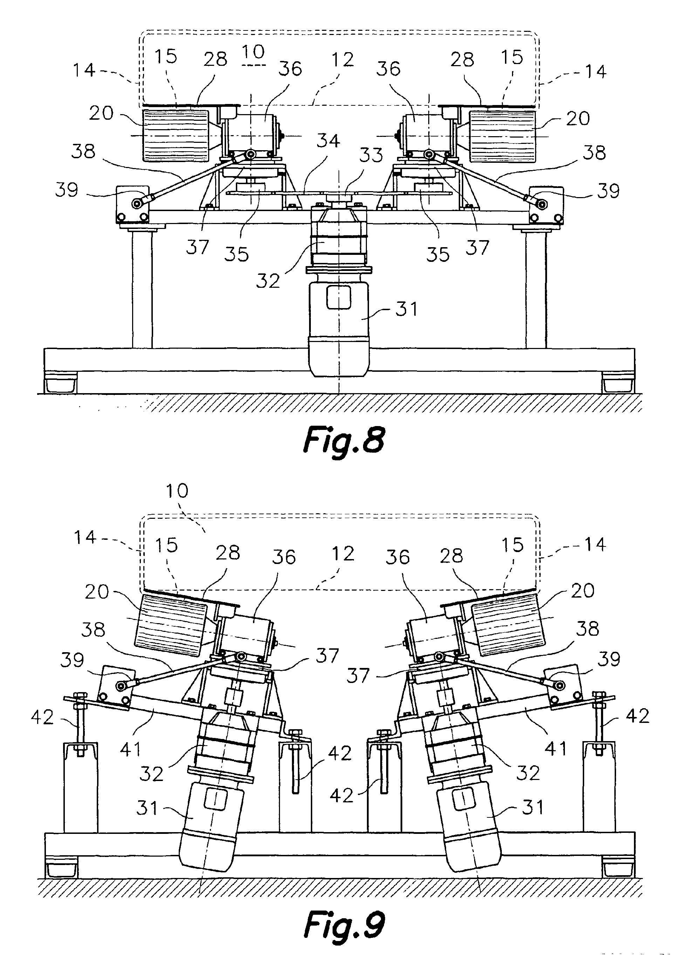

Downstream said first laminating roller 4, at a relatively large distance from it, there are arranged a pair of rotary inclined rollers 20 located in relation to areas adjacent to side edges of said lower face 12, said rotary inclined rollers 20 having a predetermined slope in combination with their rotating direction for wrinkling and moving seconds stripes 15 of the coating sheet material 5, which are end portions of said first stripes 14 and spreading and superimposing them onto said areas adjacent to the sided edges of the lower face 12 stretching them toward the centre of the lower face, thereby the first stripes 14 remain spread on the two side faces 13 as it is best illustrated in Fig. 6. The mounting of said inclined rollers will be described below in relation to Figs. 8 and 9.

Immediately downstream said pair of rotary inclined rollers 20 there is a second laminating roller 22, provided with a corresponding back roller 22a for applying a base sheet material 21, with its contact face impregnated with an adhesive substance 16, to the lower face 12 and second stripes 15, the base sheet material 21 coming from a second sheet material supplier 23. Since the application of said base sheet material 21 is carried out when the second stripes 15 are still under pressure due to the effect of the inclined rollers 20, the adherence of the base sheet 21 to the lower face 12 and to the second stripes 15 carried out by said adhesive substance 16 and pressure of rollers 22, 22a keeps the coating sheet material 5 stretched on the mat 10, as it is best shown in Fig. 7.

The coating sheet material 5 is generally, although it is not essential, an unwoven material and the base sheet material 21 is a preferably non porous sheet covered by said adhesive substance 16, which can be, for example, a bituminous material. For applying said adhesive substance 16 onto said base sheet material 21 contact face an applicator 24 is used which is located between said second supplier of continuous sheet material 23 and said second laminating roller 22 (Fig. 1). This applicator 24 includes an applying roller 29 having a part submerged in a tank 30 containing the adhesive substance 16 and another part emerged on which the contact face of the base sheet material 21 is applied.

Usually, with a thin mat of insulating material 10, the dragging force of the inclined rollers 20 is sufficient for carrying out the steps of moving said first stripes 14 to spread them on the two side faces 13 and to wrinkle, spread and superimpose the second stripes 15 of the coating sheet material 5 onto said areas adjacent to the side edges of said lower face 12. When starting the plant, is enough to place by hand front ends of the second stripes 15 under the pressure of the inclined rollers 20 in order these later go on dragging said second stripes 15 toward the centre of the lower face 12 of the mat 10 during the rest of the non-stop procedure. However, when the thickness of the mat is great, it is preferred to include at least a pair of deflectors 7, located one at either side of the conveyor 2 downstream said first laminating roller 4 and before said pair of rotary inclined rollers 20. These deflectors interfere in the assembly forwards displacement and they are adapted for folding said first stripes 14 and partly superimpose them onto said two side faces 13, and thereby forming said second stripes 15 in a substantially coplanar arrangement with the lower face 12 as it can be best seen in Fig. 4. Obviously, successive pairs of deflectors can be available, such as defectors 8 of Fig. 1. for co-operating with deflectors 7 in carrying out said operations in different steps. The plant can optionally include a side pressing device 9 located downstream said pairs of deflectors 7, 8 and before said rotary inclined rollers 20. This side pressing device 9 is adapted for pressing the first stripes 14 against the two side faces 13, as it can be seen best in Fig. 5, while the second stripes 15 are being wrinkled and moved towards the centre of the lower face 12.

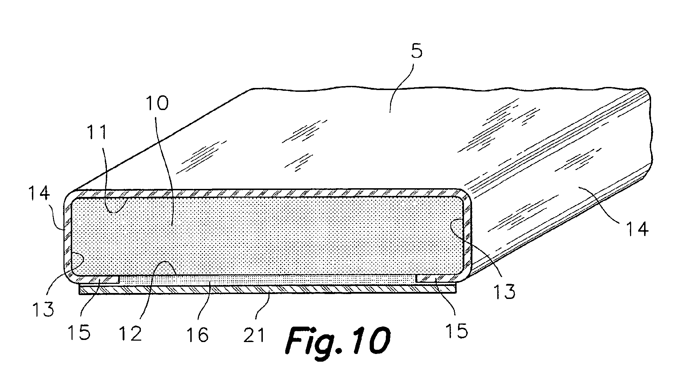

Last, at the downstream end of the plant (Fig. 1) there is a cutting device 26 arranged for cutting the mat of insulating material 10 encapsulated by the coating sheet material 5 and by the base sheet material 21 in portions of separate encapsulated insulating material 27, which are also object of this invention and will be described below in relation to Fig. 10.

As it will be understood in the plant of the invention, the function carried out by the rotary inclined rollers 20 is essential and for its good operation as well the degree and the direction of the slope thereof as its speed and direction of rotation have an influence. Also the pressure exerted by the rollers against the second stripes 15 of the coating sheet material has an influence.

Thus, a suitable arrangement of the rollers 20 includes a slope in a plane parallel to the lower face 12 of the mat 10, with the external ends of the rollers 20 more in forward position than the internal rollers with respect to the forwards moving direction D of the mat 10 and with the rollers 20 rotating so that an area thereof contacting with the lower face 12 is moved towards said direction D. In some cases, it can result positive to provide the rollers additionally with a slope in a second plane transversal to the mat of insulating material 20, with the external ends of the rollers 20 at a higher level than the internal ends.

According to a first variation of embodiment, means have been provided for regulating the slope of said rotary inclined rollers 20 in said plane parallel to the lower face 12, which are illustrated in Fig. 8. A common driving motor 31 for both rollers 20 is arranged with its shaft in substantially vertical position, that is to say, perpendicular to the lower face 12 of the mat 10 (illustrated in dashed lines in Figs. 8 and 9). This motor 31 is connected to a reducer 32 at the outlet of which is mounted a gear wheel 33 which drag a chain 34 geared with the gear wheels 35 arranged at the respective inlets of right angle couplings 36 to the outlets of which are connected said two inclined rollers 20. Thus, the shafts of rollers 20 are parallel to the lower face 12 of the mat 10. Said couplings 36 are mounted in respective rotary supports 37 capable of rotating with respect to corresponding vertical shafts coaxial to couplings 36 inlet shafts. Bars 38 provided with means for regulating their length, such as threads 39 are fixed at one end on fixed supports 40 and at the other end to the respective rotary supports 37 by means of swivel joints. By driving said means for regulating the length of the bars 38 the slope angle of the rollers 20 can be regulated independently without impairing their rotation drive.

Fig. 9 illustrates another variation of embodiment including means for regulating the slope of said rotary inclined rollers 20 as well in the parallel plane as in said transversal plane of the lower face 12. Here each roller 20 is connected to the outlet of a respective right angle coupling 36 at the inlet of which is coupled a corresponding unit of motor 31 and reducer 32. Each of said couplings 36 is mounted in a respective rotary support 37 which can rotate according to the shaft of the roller 20 and coaxial to the inlet shaft of the coupling 36 and in turn each rotary support is fixed on a structure 41 which can be inclined with respect to the lower plane of the mat 10. Screws 42 allow to regulate the slope of said structures 41 and thereby the slope of the rollers in the transversal plane of the mat 10. In addition, same as in the exemplary embodiment of Fig. 8, bars 38 provided with means for regulating its length such as threads 39 are fixed at one end to said structures 41 and at the other end to respective rotary supports 37 by means of swivel joints. By regulating the length of the bars 38 the angle of slope of the rollers 20 is regulated in the plane perpendicular to said transversal plane. Synchronisation of the rotation speeds of both rollers is achieved by electronically regulating the speeds of their respective driving motors 31.

As well in the former as in the later cases and as illustrated in Figs. 8 and 9, to secure dragging of the second stripes 15, stationary bearing plates 28 are interposed between the lower face 12 of the insulating material 10 and the second stripes 15 in the area where the rotary inclined rollers 20 are contacting them. Each of said stationary bearing plates 28 is linked to a support of its respective rotary inclined roller 20, for example, to a housing of coupling 36, and pressed against corresponding roller 20 by elastic means.

Last, referring to Fig. 10, the encapsulated fibrous insulating material of this invention comprises a core of insulating material 10 having a longitudinal configuration, which has opposite substantially flat top and lower larger faces 11, 12, two opposite side smaller faces 13 and opposite front and back faces. A coating sheet material 5 is spread on said top face 11 and has first side stripes 14 spread on said side faces 13 and second stripes 15, which are end portions of said first stripes 14 spread on areas adjacent to side edges of said lower face 12. Said coating sheet material 5 is adhered at least to said top face 11. A base sheet material 21 is adhered to said lower face 12 and to said second stripes 15 of the coating sheet material 5 superimposed thereon. The coating sheet material 5 is kept stretched against the mat of the insulating material 10 by said base sheet material 21 adhered to said lower face 12 and to said second stripes 15.

Above disclosed encapsulated fibrous insulating material can be produced by means of the procedure and plant of this invention.

Above disclosed exemplary embodiments are only for illustrating purposes and not for limiting the scope of this invention as defined in the appended claims.

## Claims

1. Procedure for non-stop encapsulating a fibrous insulating material said insulating material (10) having a lengthwise configuration and comprising opposite substantially flat top and lower larger faces (11, 12) and two opposite smaller side faces (13), the procedure being **characterized in that** it comprises the steps of:
moving forwards a continuous mat of said insulating material (10) in its lengthwise direction dragged by conveying means and with its lower face (12) on a supporting surface (2);
applying an adhesive at least onto said top face (11) of insulating material (10) by means of an applicator (3);
spreading, with at least a first laminating roller (4), a coating sheet material (5) supplied from a first supplier of continuous sheet material (8) on said top face (11) where said adhesive is applied, said coating sheet material (5) having a larger width than the sum of the width of the top face (11) and the width of the two side faces (13) so that first stripes (14) of the coating sheet material (5) protrude beyond the side edges of the larger face (11);
moving said first stripes (14) for spreading them on the two side faces (13) and wrinkling, spreading and superimposing second stripes (15) of the coating sheet material (5), which are end portions of the first stripes (14), onto areas adjacent to side edges of said lower face (12), stretching said second stripes (15) towards the centre of the lower face (12) by means of at least a pair of rotary inclined rollers (20) inclined with respect to the mat dragging direction; and
applying, by means of a second laminating roller (22), a base sheet material (21), supplied from a second continuous sheet material supplier (23) and provided with an adhesive substance (16) impregnating its contact face onto the lower face (12) and second stripes (15) thereby said base sheet material (21) is adhered by said adhesive substance (16) to the lower face (12) and to the second stripes (15) while they are still stretched by said rotary inclined rollers (20).

2. Procedure, according to claim 1, **characterized in that** it comprises folding said first stripes (14) for partly superimposing them onto the two side faces (13) by means at least of a pair of deflectors (7) located one at either side of the supporting surface (2) downstream said laminating roller (4) and before said pair of rotary inclined rollers (20), thereby said second stripes (15) are formed in an arrangement substantially coplanar to the lower face (12) while they are wrinkled and moved.

3. Procedure, according to claim 1, **characterized in that** it comprises regulating the inclination of said rotary inclined rollers (20) at least in a plane parallel to the lower face (12), the inclination of each roller being chosen in combination with its direction of rotation for wrinkling and moving related second stripe (15) towards the centre of the lower face (12) stretching the coating sheet material (5) on the mat of insulating material (10).

4. Procedure according to claim 3, **characterized in that** it further comprises regulating the inclination of said rotary inclined rollers (20) in a plane transversal to the lower face (12).

5. Procedure, according to claim 3 or 4, **characterized in that** it comprises interposing stationary bearing plates (28) between the lower face (12) of the insulating material (10) and the second stripes (15) while the rotary inclined rollers (20) are in contact with them.

6. Procedure according to claim 1, **characterized in that** it comprises after the step of folding and superimposing said first stripes (14) onto the two side faces (13), pressing with a side pressing device (9) the first stripes (14) against the two side faces (13).

7. Procedure, according to claim 1, **characterized in that** it comprises to pass said base sheet material (21) through an applicator (24) for applying said adhesive substance (16) onto said contact face thereof before the step of applying the base sheet material (21) onto the lower face (12).

8. Procedure, according to claim 1, **characterized in that** it comprises cutting, with a cutting device (26), the mat of insulating material (10) encapsulated by the coating sheet material (5) and by the base sheet material (21) in separate portions of encapsulated insulating material (27).

9. Plant for non-stop encapsulating a fibrous insulating material, said insulating material (10) having a lengthwise configuration and comprising substantially flat opposite top and lower larger faces (11, 12), and two opposite side smaller faces (13), said plant being **characterized in that** it comprises:
conveying means adapted for moving forward a continuous mat of insulating material (10) in its lengthwise direction and with its lower face (12) on a supporting surface (2);
an applicator device (3) capable to apply an adhesive at least on said top face (11) of the insulating material (10) while it is moved by said conveying means;
a first supplier of continuous sheet material (6) co-operating with a first laminating roller (4) provided with a back roller (4a) and being located downstream said applicator device (3) for spreading a coating sheet material (5) on said top face (11) on which said adhesive is applied, said coating sheet material (5) being wider than the sum of the top face (11) and the two side faces (13) so that first stripes (14) of coating sheet material (5) protrude beyond side edges of the larger face (11).
at least a pair of rotary inclined rollers (20) located in relation to areas adjacent to side edges of said lower face (12) downstream said first laminating roller (4), said rotary inclined rollers (20) having a predetermined inclination with respect to the mat dragging direction in combination with its direction of rotation for wrinkling and moving second stripes (15) of coating sheet material (5), which are end portions of said first stripes (14), and spreading and superimposing them onto said areas adjacent to the side edges of the lower face (12) stretching said second stripes (15) towards the centre of the lower face (12), thereby the first stripes (14) remain spread on the two side faces (13);
a second continuous sheet material supplier (23) co-operating with a second laminating roller (22) located under said pair of rotary inclined rollers (20) for applying a base sheet material (21), provided with an adhesive substance (16) impregnating its contact face, onto the lower face (12) and second stripes (15), the base sheet material (21) being adhered by said adhesive substance (16) to the lower face (12) and second stripes (15) while they are still stretched by said rotary inclined rollers (20).

10. Plant, according to claim 9, **characterized in that** said predetermined inclination of said rotary inclined rollers (20) is such that the external ends of the rollers (20) are more forward than the internal ends in the forward moving direction (D) of the insulating material (10) and its direction of rotation is such that an area of the rollers (20) contacting with the second stripes (15) is moving **in that** direction (D).

11. Plant, according to claim 10, **characterized in that** it comprises means for regulating the inclination of said rotary inclined rollers (20) at least in a plane parallel to the lower face (12).

12. Plant according to claim 11, **characterized in that** said means for regulating the inclination of the rotary inclined rollers (20) on a plane parallel to the lower face (12) comprise a common driving motor reducer (31, 32) for both rotary inclined rollers (20) connected by a drive (33, 34, 35) to two right angle couplings (36) at the outlet of which are connected respective rotary inclined rollers (20), said right angle couplings (36) being mounted in respective rotary supports (37) with respect to shafts coaxial to the inlet shafts of the couplings (36), adjustable fastening means (38) being provided for determining the angular position of said rotary supports (37).

13. Plant, according to claim 11, **characterized in that** it comprises means for additionally regulating the inclination of said rotary inclined rollers (20) in a plane transversal to the lower face (12).

14. Procedure, according to claim 11 or 13, **characterized in that** it comprises stationary bearing plates (28) interposed between the lower face (12) of the insulating material (10) and the second stripes (15) in the area where the rotary inclined rollers (20) are contacting them.

15. Plant, according to claim 11 or 13, **characterized in that** it comprises stationary bearing plates (28) interposed between the lower face (12) of the insulating material (10), which is thereby supported, and the second stripes (15) in the area where the rotary inclined rollers (20) are contacting them, each of said stationary bearing plates (28) being linked to a support of its respective rotary inclined roller (20) and pressed against it by elastic means.

16. Plant, according to claim 9, **characterized in that** it comprises at least a pair of deflectors (7) located one at either side of the conveyor (2) downstream said first laminating roller (4) and before said pair of rotary inclined rollers (20), said deflectors (7) interfering the forward motion of the assembly and being adapted for folding said first stripes (14) and partly superimpose them onto said two side faces (13) and thereby forming said second stripes (15) in an arrangement substantially coplanar with the lower face (12).

17. Plant, according to claim 16, **characterized in that** it comprises a side pressing device (9) located downstream said at least one pair of deflectors (7) and before said rotary inclined rollers (20), said side pressing device (9) being adapted for pressing the first stripes (14) against the two side faces (13).

18. Plant, according to claim 9, **characterized in that** it comprises an applicator device (24) located between said second supplier of continuous sheet material (23) and said second laminating roller (22), said applicator device (24) being adapted for applying said adhesive substance (16) onto said contact face of the base sheet material (21).

19. Plant, according to claim 9 or 18, **characterized in that** said adhesive substance (16) is a bituminous material.

20. Plant, according to claim 9, **characterized in that** it comprises a cutting device (26) located downstream said second laminating roller (22) for cutting the mat of insulating material (10) encapsulated by the coating sheet material (5) and by the base sheet material (21) in separate portions of encapsulated insulating material.

21. Encapsulated fibrous insulating material, of the kind comprising:
a core of a fibrous insulating material (10), which has a lengthwise configuration and has substantially flat opposite top and lower larger faces (11, 12), two smaller opposite side faces (13) and opposite front and back faces;
a coating sheet material (5) spread on said top face (11) and provided with first side stripes (14) spread on said side faces (13) and second stripes (15), which are end portions of said first side stripes (14), spread on areas adjacent to side edges of said lower face (12), said coating sheet material (5) being adhered at least to said top face (11) and
a base sheet material (21) adhered to said lower face (12) and to said second stripes,
**characterized in that** said first (14) and second stripes (15) of said coating sheet material (5) are stretched against the mat of insulating material (10), and fastened by said base sheet material (21) adhered to said lower face (12) and to said second stripes (15) with the second stripes (15) being inwardly drawn to the centre of the lower face (12).

## Patentansprüche

1. Verfahren zur Non-Stop-Verkleidung eines faserartigen Isoliermaterials, wobei das Isoliermaterial (10) einen länglichen Aufbau aufweist und eine im wesentlichen flache Oberseite und gegenüberliegende größere Unterseite (11, 12) sowie zwei gegenüberliegende kleinere Seitenflächen (13) besitzt, wobei das Verfahren **dadurch gekennzeichnet ist, dass** es folgende Schritte umfasst:
Vorwärtsbewegung einer Endlosmatte aus Isoliermaterial (10) in Längsrichtung, die mittels eines Transportmittels erfolgt, wobei deren Unterseite (12) auf einer Auflagefläche (2) ruht,
Auftrag eines Klebstoffs zumindest auf die Oberseite (11) des Isoliermaterials (10) mittels einer Auftragsvorrichtung (3),
Ausbreiten, mit mindestens einer ersten Kaschierwalze (4), eines Deckfolienmaterials (5), das aus einer ersten Endlosfolienmaterialbeschickungsvorrichtung (8) zugeführt wird, auf der Oberseite (11) auf die der Auftrag des Klebstoffs erfolgt, wobei das Deckfolienmaterial (5) eine größere Breite aufweist als die Summe der Breite der Oberseite (11) und der Breite der zwei Seitenflächen (13), so dass die ersten Streifen (14) des Deckfolienmaterials (5) über die Seitenkanten der größeren Fläche (11) hinausragen;
Bewegung der ersten Streifen (14) zwecks deren Ausbreitung auf den zwei Seitenflächen (13) sowie Falten, Ausbreitung und Übereinanderlegen der zweiten Streifen (15) des Deckfolienmaterials (5), bei denen es sich um die Endabschnitte der ersten Streifen (14) handelt, auf den zu den Seitenkanten der Unterseite (12) benachbarten Bereichen, wobei die zweiten Streifen (15) in Richtung der Mitte der Unterseite (12) mit mindestens einem Paar geneigter Drehwalzen (20), die bezüglich der Mattenziehrichtung geneigt sind, gestreckt werden; sowie
Auftrag, mittels einer zweiten Kaschierwalze (22), eines Trägerfolienmaterials (21), das aus einer zweiten Endlosfolienmaterialbeschickungsvorrichtung (23) zugeführt wird und mit eine r Klebstoffsubstanz (16) versehen ist, mit der dessen Kontaktfläche auf der Unterseite (12) und die zweiten Streifen (15) imprägniert werden, wodurch das Trägerfolienmaterial (21) durch den Klebstoff (16) zur Haftung an der Unterseite (12) und den zweiten Streifen (15) gebracht wird, während diese durch die geneigten Drehwalzen (20) noch gestreckt werden.

2. Verfahren nach Anspruch 1, **dadurch gekennzeichnet, dass** es das Falten der ersten Streifen (14) umfasst, wodurch diese teilweise auf den zwei Seitenflächen (13) mittels mindestens einem Paar Ablenkbleche (7), die jeweils auf beiden Seiten der Stützfläche (2) und nach der Kaschierwalze (4) und vor dem Paar geneigter Drehwalzen (20) angebracht sind, übereinander gelagert werden, wodurch die zweiten Streifen (15) im wesentlichen koplanar mit der Unterseite (12) angeordnet werden, während sie noch gefaltet und bewegt werden.

3. Verfahren nach Anspruch 1, **dadurch gekennzeichnet, dass** es die Regulierung der Neigung der geneigten Drehwalzen (20) in mindestens einer zur Unterseite (12) parallelen Ebene umfasst, wobei die Neigung der jeweiligen Walze in Verbindung mit deren Drehrichtung zum Falten und Bewegen des damit in Verbindung stehenden zweiten Streifens (15) in Richtung der Mitte der Unterseite (12) gewählt wird, wodurch das Deckfolienmaterial (5) auf der Matte aus Isoliermaterial (10) gestreckt wird.

4. Verfahren nach Anspruch 3, **dadurch gekennzeichnet, dass** es außerdem die Regulierung der Neigung der geneigten Drehwalzen (20) in einer Ebene quer zur Unterseite (12) umfasst.

5. Verfahren nach Anspruch 3 oder 4, **dadurch gekennzeichnet, dass** es das Dazwischenschalten von feststehenden Lagerplatten (28) zwischen der Unterseite (12) des Isoliermaterials (10) und der zweiten Streifen (15) umfasst, während die geneigten Drehwalzen (20) damit in Berührung stehen.

6. Verfahren nach Anspruch 1, **dadurch gekennzeichnet, dass** es nach dem Schritt des Faltens und Übereinanderlagerns der ersten Streifen (14) auf die zwei Seitenflächen (13) das Pressen der ersten Streifen (14) gegen die zwei Seitenflächen (13) mittels einer Seitenpressvorrichtung (9) umfasst.

7. Verfahren nach Anspruch 1, **dadurch gekennzeichnet, dass** es den Transport des Trägerfolienmaterials (21) durch eine Auftragsvorrichtung (24) hindurch umfasst, in der auf die Kontaktfläche desselben vor dem Auftrag des Trägerfolienmaterials (21) auf die Unterseite (12) eine Klebstoffsubstanz (16) aufgetragen wird.

8. Verfahren nach Anspruch 1, **dadurch gekennzeichnet, dass** es das Schneiden, mittels einer Schneidvorrichtung (26), der durch das Folienmaterial (5) und das Trägerfolienmaterial (21) in getrennten Abschnitten des verkleideten Isoliermaterials (27) verkleideten Matte aus Isoliermaterial (10) umfasst.

9. Anlage zur Non-Stop-Verkleidung eines faserartigen Isoliermaterials, wobei das Isoliermaterial (10) einen länglichen Aufbau aufweist und eine im wesentlichen flache Oberseite und eine gegenüberliegende größere Unterseite (11, 12) sowie zwei gegenüberliegende kleinere Seitenflächen (13) besitzt, wobei die Anlage **dadurch gekennzeichnet ist, dass** sie folgendes umfasst:
Transportmittel, das zur Vorwärtsbewegung einer Endlosmatte aus Isoliermaterial (10) in dessen Längsrichtung geeignet ist, wobei dessen Unterseite (12) auf einer Auflagefläche (2) ruht;
Auftragsvorrichtung (3), mit der sich ein Klebstoff zumindest auf die Oberseite (11) des Isoliermaterials (10) auftragen lässt, während dieses durch das Transportmittel bewegt wird;
eine erste Endlosfolienmaterialbeschickungsvorrichtung (6), die mit einer ersten Kaschierwalze (4) mit Zufuhrwalze (4a) in Eingriff steht und nach der Auftragsvorrichtung (3) zur Ausbreitung eines Deckfolienmaterials (5) auf der Oberseite (11), auf der der Klebstoff aufgetragen wird, angeordnet ist, wobei das Deckfolienmaterial (5) breiter ist als die Summe aus der Oberseite (11) und den zwei Seitenflächen (13), so dass die ersten Streifen (14) des Deckfolienmaterials (5) über die Seitenkanten der größeren Fläche (11) hinausragen;
zumindest ein Paar geneigter Drehwalzen (20), die bezüglich der zu den Seitenkanten der Unterseite (12) benachbarten Bereiche nach der ersten Kaschierwalze (4) angeordnet sind, wobei die geneigten Drehwalzen (20) eine vorgegebene Neigung bezüglich der Mattenziehrichtung in Verbindung mit deren Drehrichtung zum Falten und Bewegen der zweiten Streifen (15) des Endlosfolienmaterials (5) aufweisen, bei denen es sich um die Endabschnitte der ersten Streifen (14) handelt, sowie zu deren Ausbreitung und Übereinanderlagerung auf den zu den Seitenkanten der Unterseite (12) benachbarten Bereichen, wodurch die zweiten Streifen (15) in Richtung der Mitte der Unterseite (12) gestreckt werden, wodurch die ersten Streifen (14) auf den zwei Seitenflächen (13) ausgebreitet bleiben;
eine zweite Endlosfolienmaterialbeschickungsvorrichtung (23), die mit einer zweiten Kaschierwalze (22) in Eingriff steht, die unter dem Paar geneigter Drehwalzen (20) angeordnet ist, zum Auftragen eines Trägerfolienmaterials (21), das mit einer Klebstoffsubstanz (16) versehen ist, mit der dessen Kontaktfläche auf der Unterseite (12) und den zweiten Streifen (15) imprägniert wird, wodurch das Trägerfolienmaterial (21) durch den Klebstoff (16) zur Haftung an der Unterseite (12) und den zweiten Streifen (15) gebracht wird, während diese noch durch die geneigten Drehwalzen (20) gestreckt werden.

10. Anlage nach Anspruch 9, **dadurch gekennzeichnet, dass** die vorgegebene Neigung der geneigten Drehwalzen (20) so bemessen ist, dass die äußeren Enden der Walzen (20) weiter vorne liegen als die inneren Enden in der Vorwärtsbewegungsrichtung (D) des Isoliermaterials (10) und deren Drehung in solch einer Richtung verläuft, dass ein Bereich der Walzen (20), der mit den zweiten Streifen (15) in Berührung steht, sich in dieser Richtung (D) bewegt.

11. Anlage nach Anspruch 10, **dadurch gekennzeichnet, dass** sie Mittel zur Regulierung der Neigung der geneigten Drehwalzen (20) zumindest in einer zur Unterseite (12) parallelen Ebene umfasst.

12. Anlage nach Anspruch 11, **dadurch gekennzeichnet, dass** die Mittel zur Regulierung der Neigung der geneigten Drehwalzen (20) zumindest in einer zur Unterseite (12) parallelen Ebene ein gemeinsames Antriebsmotorreduktionsgetriebe (31, 32) für beide geneigten Drehwalzen (20) umfasst, die über einen Antrieb (33, 34, 35) mit zwei rechtwinkligen Kupplungen (36) verbunden sind, an deren Ausgang entsprechende geneigte Drehwalzen (20) verbunden sind, wobei die rechtwinkligen Kupplungen (36) bezüglich der zu den Eingangswellen der Kupplungen (36) koaxialen Wellen in entsprechenden Drehhalterungen (37) angeordnet sind, wobei einstellbare Befestigungsmittel (38) zur Bestimmung der Winkellage der Drehhalterungen (37) vorgesehen sind.

13. Anlage nach Anspruch 11, **dadurch gekennzeichnet, dass** sie Mittel zur zusätzlichen Regulierung der Neigung der geneigten Drehwalzen (20) in einer Ebene quer zur Unterseite (12) umfasst.

14. Anlage nach Anspruch 11 oder 13, **dadurch gekennzeichnet, dass** sie feststehende Lagerplatten (28) umfasst, die zwischen der Unterseite (12) des Isoliermaterials (10) und den zweiten Streifen (15) in dem Bereich angeordnet sind, in dem die geneigten Drehwalzen (20) damit in Berührung stehen.

15. Anlage nach Anspruch 11 oder 13, **dadurch gekennzeichnet, dass** sie feststehende Lagerplatten (28) umfasst, die zwischen der Unterseite (12) des Isoliermaterials (10), das **dadurch** gestützt wird, und den zweiten Streifen (15) in dem Bereich angeordnet sind, in dem die geneigten Drehwalzen (20) damit in Berührung stehen, wobei die feststehenden Lagerplatten (28) jeweils mit einem Träger der jeweiligen geneigten Drehwalze (20) verbunden und durch Federmittel gegen diesen gedrückt wird.

16. Anlage nach Anspruch 9, **dadurch gekennzeichnet, dass** sie zumindest ein Paar Ablenkbleche (7) umfassen, die auf beiden Seiten der Transportvorrichtung (2) nach der ersten Kaschierwalze (4) und vor dem Paar geneigter Drehwalzen (20) angeordnet sind, wobei die Ablenkbleche (7) die Vorwärtsbewegung des Aufbaus stören und zum Falten und zur teilweisen Überlagerung der ersten Streifen (14) auf den zwei Seitenflächen (13) geeignet sind, wodurch eine mit der Unterseite (12) im wesentlichen koplanare Anordnung der zweiten Streifen (15) erfolgt.

17. Anlage nach Anspruch 16, **dadurch gekennzeichnet, dass** sie eine Seitenpressvorrichtung (9) umfasst, die nach dem zumindest einem Paar Ablenkbleche (7) und vor den geneigten Drehwalzen (20) angeordnet ist, wobei die Seitenpressvorrichtung (9) zum Pressen der ersten Streifen (14) gegen die zwei Seitenflächen (13) geeignet ist.

18. Anlage nach Anspruch 9, **dadurch gekennzeichnet, dass** sie eine Auftragsvorrichtung (24) aufweist, die zwischen der zweiten Endlosfolienmaterialbeschickungsvorrichtung (23) und der zweiten Kaschierwalze (22) angeordnet ist, wobei die Auftragsvorrichtung (24) zum Auftragen der Klebstoffsubstanz (16) auf die Kontaktfläche des Trägerfolienmaterials (21) geeignet ist.

19. Anlage nach Anspruch 9 oder 18, **dadurch gekennzeichnet, dass** es sich bei der Klebstoffsubstanz (16) um ein Bitumenmaterial handelt.

20. Anlage nach Anspruch 9, **dadurch gekennzeichnet, dass** sie eine nach der zweiten Kaschierwalze (22) angeordnete Schneidvorrichtung (26) zum Schneiden der Matte aus Isoliermaterial (10) umfasst, das durch das Deckfolienmaterial (5) und durch das Trägerfolienmaterial (21) in getrennten Abschnitten des verkleideten Isoliermaterials verkleidet ist.

21. Verkleidetes faserartiges Isoliermaterial mit:
einem Kern aus faserartigem Isoliermaterial (10), das einen länglichen Aufbau und eine im wesentlichen flache Ober- und eine gegenüberliegende größere Unterseite (11, 12), zwei gegenüberliegende kleinere Seitenflächen (13) und eine gegenüberliegende Vorder- und Rückfläche besitzt;
einem Deckfolienmaterial (5), das auf der Oberseite (11) ausgebreitet und mit Seitenstreifen (14), die auf den Seitenflächen (13) ausgebreitet sind, und zweiten Streifen (15) versehen ist, bei denen es sich um die Endabschnitte der ersten Seitenstreifen (14) handelt, die auf zu den Seitenkanten der Unterseite (12) benachbarten Bereiche ausgebreitet sind, wobei das Deckfolienmaterial (5) zumindest an der Oberseite (11) haftet, sowie
einem Trägerfolienmaterial (21), das an der Unterseite (12) und den zweiten Streifen haftet,
**dadurch gekennzeichnet, dass** die ersten (14) und zweiten (15) Streifen des Deckfolienmaterials (5) gegen die Matte aus Isoliermaterial (10) gestreckt und durch das an der Unterseite (12) und an den zweiten Streifen (15) haftende Trägerfolienmaterial (21) befestigt sind, wobei die zweiten Streifen (15) in Richtung der Mitte der Unterseite (12) nach innen gezogen sind.

## Revendications

1. Méthode pour l'encapsulage continu d'un matériau isolant fibreux, ce matériau isolant (10) ayant une configuration allongée et comportant des faces opposées sensiblement plates, supérieure et inférieure plus grandes (11, 12) et deux faces opposées latérales plus petites (13), la méthode **se caractérisant en ce qu'**elle comprend les étapes suivantes de:
- déplacer vers l'avant un tapis continu de ce matériau isolant (10) en sa direction longitudinale entraîné par des moyens convoyeurs et avec sa face inférieure (12) sur une surface de support (2);
- appliquer un adhésif sur au moins cette face supérieure (11) du matériau isolant (10) au moyen d'un applicateur (3);
- étendre, avec au moins un premier rouleau laminoir (4), un matériau en feuille de revêtement (5) fourni par un premier distributeur de matériau continu en feuille (8) sur cette face supérieure (11) où est appliqué cet adhésif, ce matériau en feuille de revêtement (5) étant plus large que la somme de la largeur de la face supérieure (11) et la largeur des deux faces latérales (13) de sorte que les premières bandes (14) du matériau en feuille de revêtement (5) dépasse au-delà des bords latéraux de la face la plus grande (11);
- déplacer ces premières bandes (14) pour les étendre sur les deux faces latérales (13) et froncer, étendre et superposer des deuxièmes bandes (15) du matériau en feuille de revêtement (5), qui sont des portions d'extrémité des premières bandes (14), sur les régions adjacentes des bords latéraux de cette face inférieure (12), en étirant ces deuxièmes bandes (15) vers le centre de la face inférieure (12) au moyen d'au moins une paire de rouleaux inclinés tournants (20), inclinés par rapport à la direction d'entraînement du tapis; et
- appliquer au moyen d'un deuxième rouleau laminoir (22), un matériau en feuille de base (21) provenant d'un deuxième distributeur de matériau en feuille continu (23) et pourvu d'une substance adhésive (16) imprégnant sa face de contact sur la face inférieure (12) et des deuxièmes bandes (15) de sorte que ce matériau en feuille de base (21) soit collé par cette substance adhésive (16) à la face inférieure (12) et aux deuxièmes bandes (15) pendant qu'elles sont encore étirées par ces rouleaux inclinés tournants (20).

2. Méthode, conformément à la revendication 1, **caractérisée en ce qu'**elle comporte le pliage de ces premières bandes (14) pour les superposer en partie sur les deux faces latérales (13) au moyen d'au moins une paire de déflecteurs (7) situés un sur chaque côté de la surface de support (2) en aval de ce rouleau laminoir (4) et à l'avant de cette paire de rouleaux inclinés tournants (20) de sorte que ces deuxièmes bandes (15) soient formées dans un agencement sensiblement coplanaire à la face inférieure (12) pendant qu'elles sont froncées et déplacées.

3. Méthode, conformément à la revendication 1, **caractérisée en ce qu'**elle comporte le réglage de l'inclinaison de ces rouleaux inclinés tournants (20) au moins sur un plan parallèle à la face inférieure (12), l'inclinaison de chaque rouleau étant choisie en combinaison avec sa direction de rotation pour froncer et déplacer les deuxièmes bandes correspondantes (15) vers le centre de la face inférieure (12) en étirant le matériau en feuille de revêtement (5) sur le tapis en matériau isolant (10).

4. Méthode conformément à la revendication 3, **caractérisée en ce qu'**elle comprend de plus le réglage de l'inclinaison de ces rouleaux inclinés tournants (20) sur un plan transversal à la face inférieure (12).

5. Méthode, conformément à la revendication 3 ou 4, **caractérisée en ce qu'**elle comprend l'interposition de plaques de support fixes (28) entre la face inférieure (12) du matériau isolant (10) et les deuxièmes bandes (15) pendant que les rouleaux inclinés tournants (20) sont en contact avec elles.

6. Méthode conformément à la revendication 1, **caractérisée en ce qu'**elle comprend, après l'étape de pliage et de superposition de ces premières bandes (14) sur les deux faces latérales (13) en pressant, avec un dispositif presseur latéral (9), les premières bandes (14) contre les deux faces latérales (13).

7. Méthode, conformément à la revendication 1, **caractérisée en ce qu'**elle comporte le passage de ce matériau en feuille de base (21) à travers un applicateur (24) pour appliquer cette substance adhésive (16) sur cette face de contact avant l'étape d'application du matériau en feuille de base (21) sur la face inférieure (12).

8. Méthode, conformément à la revendication 1, **caractérisée en ce qu'**elle comporte la coupe avec un dispositif coupant (26), du tapis en matériau isolant (10) encapsulé par le matériau en feuille de revêtement (5) et par le matériau en feuille de base (21) en portions séparées de matériau isolant encapsulé (27).

9. **Installation pour l'encapsulage continu de matériau isolant fibreux, ce** matériau isolant (10) ayant une configuration longitudinale et comportant des faces opposées sensiblement plates supérieure et inférieure (11, 12) et deux faces opposées plus petites (13), cette installation étant **caractérisée en ce qu'**elle comprend:
- des moyens convoyeurs adaptés pour déplacer en avant un tapis continu en matériau isolant (10) en sa direction longitudinale et avec sa face inférieure (12) sur une surface de support (2);
- un dispositif applicateur (3) capable d'appliquer un adhésif sur au moins cette face supérieure (11) en matériau isolant (10) pendant qu'il est déplacé par ces moyens convoyeurs;
- un premier distributeur de matériau en feuille continu (6) coopérant avec un premier rouleau laminoir (4) pourvu d'un rouleau arrière (4a) et étant situé en aval de ce dispositif applicateur (3) pour étendre un matériau en feuille de revêtement (5) sur cette face supérieure (11) sur laquelle cet adhésif est appliqué, ce matériau en feuille de revêtement (5) étant plus large que la somme de la face supérieure (11) et des deux faces latérales (13) de sorte que ces premières bandes (14) en matériau en feuille de revêtement (5) dépassent au-delà des bords latéraux de la face la plus grande (11).
- au moins une paire de rouleaux inclinés tournants (20) situés par rapport aux régions adjacentes à ces bords latéraux de cette face inférieure (12) en aval de ce premier rouleau laminoir (4), ces rouleaux inclinés tournants (20) ayant une inclinaison prédéterminée par rapport à la direction d'entraînement du tapis en combinaison avec sa direction de rotation pour froncer et déplacer les deuxièmes bandes (15) en matériau en feuille de revêtement (5), qui sont les portions d'extrémité de ces premières bandes (14) et les étendre et les superposer sur ces régions adjacentes aux bords latéraux de la face inférieure (12) en étirant ces deuxièmes bandes (15) vers le centre de la face inférieure (12), de sorte que les premières bandes (14) restent étendues sur les deux faces latérales (13);
- un deuxième distributeur de matériau en feuille continu (23) coopérant avec un deuxième rouleau laminoir (22) situé sous cette paire de rouleaux inclinés tournants (20) pour appliquer un matériau en feuille de base (21), pourvu d'une substance adhésive (16) imprégnant sa surface de contact, sur la face inférieure (12) et des deuxièmes bandes (15), le matériau en feuille de base (21) étant collé par cette substance adhésive (16) sur la face inférieure (12) et des deuxièmes bandes (15), pendant qu'elles sont encore étirées par ces rouleaux inclinés tournants (20).

10. Installation, conformément à la revendication 9, **caractérisée en ce que** cette inclinaison prédéterminée de ces rouleaux inclinés tournants (20) est telle que les extrémités externes des rouleaux (20) sont plus déplacées vers l'avant que les extrémités internes dans la direction de déplacement vers l'avant (D) du matériau isolant (10) et sa direction de rotation est telle qu'une région des rouleaux (20) en contact avec les deuxièmes bandes (15) se déplace dans cette direction (D).

11. Installation, conformément à la revendication 10, **caractérisée en ce qu'**elle comporte des moyens pour régler l'inclinaison de ces rouleaux inclinés tournants (20) au moins sur un plan parallèle à la face inférieure (12).

12. Installation conformément à la revendication 11, **caractérisée en ce que** ces moyens pour régler l'inclinaison des rouleaux inclinés tournants (20) sur un plan parallèle à la face inférieure (12) comprend un moto-réducteur d'actionnement commun (31, 32) pour les rouleaux inclinés tournants (20) reliés par une commande (33, 34, 35) à deux accouplements à angle droit (36) à la sortie desquels sont reliés des rouleaux inclinés tournants respectifs (20), ces accouplements à angle droit (36) étant montés sur des supports tournants respectifs (37) par rapport aux axes coaxiaux aux axes d'entrée des accouplements (36), des moyens de fixation réglables (38) étant pourvus pour déterminer la position angulaire de ces supports tournants (37).

13. Installation, conformément à la revendication 11, **caractérisée en ce qu'**elle comprend des moyens pour régler de plus l'inclinaison de ces rouleaux inclinés tournants (20) sur un plan transversal à la face inférieure (12).

14. Méthode, conformément à la revendication 11 ou 13, **caractérisée en ce qu'**elle comporte des plaques de support fixes (28) interposées entre la face inférieure (12) du matériau isolant (10) et les deuxièmes bandes (15) dans la région où les rouleaux inclinés tournants (20) font contact avec elles.

15. Installation, conformément à la revendication 11 ou 13, **caractérisée en ce qu'**elle comprend des plaques de support fixes (28) interposées entre la face inférieure (12) du matériau isolant (10), qui est ainsi supporté et les deuxièmes bandes (15) dans la région où les rouleaux inclinés tournants (20) sont en contact avec elles, chacune de ces plaques de support fixes (28) étant reliée à un support de son rouleau incliné tournant respectif (20) et pressée contre lui par des moyens élastiques.

16. Installation, conformément à la revendication 9, **caractérisée en ce qu'**elle comprend au moins une paire de déflecteurs (7) situés un sur chacun des côtés du convoyeur (2) en aval de ce premier rouleau laminoir (4) et à l'avant de cette paire de rouleaux inclinés tournants (20), ces déflecteurs (7) interférant le mouvement vers l'avant de l'ensemble et étant adapté pour le pliage de ces premières bandes (14) et les superpose en partie sur ces deux faces latérales (13) et en formant ainsi ces deuxièmes bandes (15) dans un agencement sensiblement coplanaire avec la face inférieure (12).

17. Installation, conformément à la revendication 16, **caractérisée en ce qu'**elle comporte un dispositif latéral de pressage (9) situé en aval de cette au moins une paire de déflecteurs (7) et devant ces rouleaux inclinés tournants (20), ce dispositif de pressage latéral (9) étant adapté pour presser les premières bandes (14) contre les deux faces latérales (13).

18. Installation, conformément à la revendication 9, **caractérisée en ce qu'**elle comporte un dispositif applicateur (24) situé entre ce deuxième distributeur de matériau en feuille continu (23) et ce deuxième rouleau laminoir (22), ce dispositif applicateur (24) étant adapté pour appliquer cette substance adhésive (16) sur cette face de contact du matériau en feuille de base (21).

19. Installation, conformément à la revendication 9 ou 18, **caractérisée en ce que** cette substance adhésive (16) est un matériau bitumineux.

20. Installation, conformément à la revendication 9, **caractérisée en ce qu'**elle comporte un dispositif de coupe (26) situé en aval de ce deuxième rouleau laminoir (22) pour couper le tapis en matériau isolant (10) encapsulé par le matériau en feuille de revêtement (5) et par le matériau en feuille de base (21) en portions séparées de matériau isolant encapsulé.

21. Matériau isolant fibreux encapsulé, du genre comportant:
- un noyau en matériau isolant fibreux (10), ayant une configuration allongée et ayant des faces opposées sensiblement plates, supérieure et inférieure (11, 12), deux faces latérales opposées plus petites (13) et des faces opposées avant et arrière;
- un matériau en feuille de revêtement (5) étendu sur cette face supérieure (11) et pourvu de premières bandes latérales (14) étendues sur ces faces latérales (13) et des deuxièmes bandes (15) qui sont les portions d'extrémité de ces premières bandes latérales (14) étendues sur des régions adjacentes de ces bords latéraux de cette face inférieure (12), ce matériau en feuille de revêtement (5) étant collé au moins sur cette face supérieure (11) et
- un matériau en feuille de base (21) collé sur cette face inférieure (12) et ces deuxièmes bandes.
**caractérisé en ce que** ces première (14) et deuxième bandes (15) de ce matériau en feuille de revêtement (5) sont étirées contre le tapis en matériau isolant (10) et fixées par ce matériau en feuille de base (21) collé sur cette face inférieure (12) et sur ces deuxièmes bandes (15) les deuxièmes bandes (15) étant tirées vers l'intérieur jusqu'au centre de la face inférieure (12).
